(19) Europäisches Patentamt
European Patent Office
Office européen des brevets

(11) **EP 4 488 706 A1**

(12) **EUROPEAN PATENT APPLICATION**

(43) Date of publication:
**08.01.2025 Bulletin 2025/02**

(51) International Patent Classification (IPC):
**G01S 5/02** (2010.01)   **G06N 20/00** (2019.01)
**G01S 5/16** (2006.01)   **G01S 5/18** (2006.01)

(21) Application number: **23184247.7**

(22) Date of filing: **07.07.2023**

(52) Cooperative Patent Classification (CPC):
**G01S 5/0278; G06N 20/00;** G01S 5/0252;
G01S 5/16; G01S 5/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nagravision Sàrl**
**1033 Cheseaux-sur-Lausanne (CH)**

(72) Inventors:
• **BAHROUN, Aymen**
**1033 Cheseaux-sur-Lausanne (CH)**
• **FENDRI, Hedi**
**1033 Cheseaux-sur-Lausanne (CH)**
• **LAHLOU, Lamyae**
**1033 Cheseaux-sur-Lausanne (CH)**
• **GRADASSI, Luca**
**1033 Cheseaux-sur-Lausanne (CH)**

(74) Representative: **Mewburn Ellis LLP**
**Aurora Building**
**Counterslip**
**Bristol BS1 6BX (GB)**

(54) **ASSET LOCATING METHOD**

(57) A method for training a machine learning model for locating an asset in an environment when the machine learning model is executed on a computer system, wherein the environment comprises a plurality of zones. The method comprises receiving data corresponding to a first set of training signals, wherein the first set of training signals are received at a plurality of receivers, within a first data collection period, from a plurality of training tags located in a first zone of the plurality of zones. The plurality of training tags are moved from a first position in the first zone to a second position in the first zone within the first data collection period. The method also comprises receiving data corresponding to a second set of training signals, wherein the second set of training signals are received at the plurality of receivers, within a second data collection period, from a plurality of training tags located in a second zone of the plurality of zones. The plurality of training tags are moved from a first position in the second zone to a second position in the second zone within the second data collection period. The method further comprises generating training data for the first zone, wherein the training data for the first zone comprises values of the training signals received from training tags located in the first zone within a first predefined deviation window, Wt, within the first data collection period, each value associated with the receiver at which a respective training signal was received. The method further comprises generating training data for the second zone, wherein the training data for the second zone comprises values of the training signals received from training tags located in the second zone within a second predefined deviation window, Wt', within the second data collection period, each value associated with the receiver at which a respective training signal was received. The method also comprises training, using the training data for the first zone and the training data for the second zone, a machine learning model to output a zone as a determined location of an asset in the environment based on an input including data corresponding to one or more signals received at one or more receivers from a tag associated with the asset.

EP 4 488 706 A1

Fig. 2

## Description

### *Field of the Invention*

The present invention relates to a method for training a machine learning model for locating an asset in an environment. The present invention also relates to a method for locating an asset in an environment and particularly, although not exclusively, to a method for locating an asset in an environment using machine learning techniques.

### *Background*

In many environments, there is a need to efficiently locate an asset in the environment. For example, in an indoor environment, such as a warehouse, there may be multiple assets (e.g., objects) in the indoor environment and the correct asset may need to be found quickly.

Conventionally, humans were tasked with finding the correct asset in an environment such as a warehouse. Often, they did not know where the assets were, and so had to search the environment until they found the correct asset. Sometimes, maps of the environment, which mapped the location of different assets in the environment, could be used. The user could then follow the map to locate the required asset. However, this approach is labour intensive, and thus inefficient. However, a map may not be available, and the user may not know where the required asset is located in the environment.

It is known to track assets using GPS (Global Positioning System). A GPS tag positioned on the asset communicates with relevant satellites such that the asset can be located wherever they are positioned around the world. GPS provides live tracking of assets, and is thus especially useful for tracking assets in transit, such as rental cars. However, GPS tracking can be costly to implement, especially in a warehouse or indoor environment. Furthermore, GPS tracking of assets cannot provide an accurate or precise location in an indoor environment such as a warehouse. For example, GPS trackers may only be accurate to within >6m. In an indoor environment, although the GPS tracking may find an approximate location of the asset, a human would still need to manually search for and find the asset within that area. This leads to inefficient asset location. GPS tracking can also be costly to implement in some situations.

It is also known to use radio frequency (RF) technology to locate assets in an environment. In particular, a radio frequency tag may be positioned on the asset, and the location of the asset may be determined based on Relative Signal Strength Indicator (RSSI) values measured by a plurality of receivers, and using a positioning algorithm such as trilateration or Time Difference of Arrival (TDOA) techniques. Bluetooth Low Energy (BLE) or Near Field Communication (NFC) technology may be used to locate assets in this way. Although these approaches are less costly than GPS, they are still not precise or accurate enough to provide efficient location of assets in an indoor environment such as a warehouse.

This lack of accuracy of the RF technology techniques results from the assumption that RF propagation is in free space, without obstacles. However, in reality, there are often objects such as furniture, walls, and/or people in the environment, which impact radio signal propagation due to diffraction, reflection and/or scattering of the RF signals. This is known as RF multipath propagation/interference, and is particularly prevalent in indoor environments.

Multipath interference occurs when an RF signal arrives at a receiver via two or more routes. This results in the total length of each signal path, and thus the time delay and phase of each received signal, to be different. This can lead to the two or more signals arriving in phase or out of phase, depending on the paths taken, meaning the signal power (RSSI) increases or decreases depending on the path taken. For stationary assets at a fixed location in a fixed environment, the multipath interference will be substantially constant over time when the assets' signals are measured from a given point in space, leading to large errors in the location measurement, and thus reduced accuracy.

These RF propagation limitations can result in conventional location algorithms, such as BLE RSSI and trilateration, having a low locations precision of 5-10m. In order to improve the accuracy of the location measurement, it is known to increase the number of receivers used to measure RSSI values from a radio frequency tag. However, such techniques still result in limited accuracy, and involve a complex deployment often with a vast quantity of receivers.

The present invention has been devised in light of the above considerations.

### *Summary of the Invention*

According to a first aspect, there is provided a method for training a machine learning model for locating an asset in an environment when the machine learning model is executed on a computer system, wherein the environment comprises a plurality of zones, the method comprising:

receiving data corresponding to a first set of training signals, wherein the first set of training signals are received at a plurality of receivers, within a first data collection period, from a plurality of training tags located in a first zone of the plurality of zones, and wherein the plurality of training tags are moved from a first position in the first zone to a second position in the first zone within the first data collection period;
receiving data corresponding to a second set of training signals, wherein the second set of training signals are received at the plurality of receivers, within a second data collection period, from a plurality of training tags located in a second zone of the plurality of zones, and wherein the plurality of training tags are moved from a first position in the second zone to a second position in the second zone within the second data collection period;

generating training data for the first zone, wherein the training data for the first zone comprises values of the training signals received from training tags located in the first zone within a first predefined deviation window, Wt, within the first data collection period, each value associated with the receiver at which a respective training signal was received;

generating training data for the second zone, wherein the training data for the second zone comprises values of the training signals received from training tags located in the second zone within a second predefined deviation window, Wt', within the second data collection period, each value associated with the receiver at which a respective training signal was received; and

training, using the training data for the first zone and the training data for the second zone, a machine learning model to output a zone as a determined location of an asset in the environment based on an input including data corresponding to one or more signals received at one or more receivers from a tag associated with the asset.

In this way, the machine learning model is trained to determine the location of the asset as being in a particular zone in the environment, based on training data collected from the environment itself. This reduces the impact of multipath interference by leveraging previous data collected from the environment.

Furthermore, by utilizing dynamic data collection, whereby the training tags in each zone are moved within the zone during the relevant data collection period (e.g., at a time within the relevant data collection period), and then, for each zone, synchronizing in time the data corresponding to the training signals received at the plurality of receivers, there is no requirement for the training tags to be positioned spread across the zones, or for the receivers to be synchronized in order to collect the training data. This reduces the operational costs and time required for collecting the training data, (e.g., because there is no requirement to position multiple tags all in different locations around the zones). Accordingly, the dynamic data collection process is less complex.

The trained machine learning model can thus be used to determine a precise location of a required asset in the environment. In e.g., a warehouse environment, an operator is thus able to efficiently locate a required asset in the environment.

Optional features will now be set out. The following optional features are combinable singly or in any combination with any aspect of the invention.

The environment may be an inside space, such as one or more rooms, or a warehouse, for example. The environment may be (part of) a hospital, an office building, an airport, a hangar, a factory, a manufacturing plant, a big-box store, a distribution warehouse, a fabrication plant, a campus (e.g., office school, university, etc.) a mall/shopping centre, a hotel, a server farm, or the like, for example.

The environment may be an outside space, e.g., a carpark.

The tag associated with the asset may be positioned on or adjacent to the asset. For example, if the environment is a warehouse, the tag may be positioned on a pallet containing the asset, or a shelf upon which the asset is positioned.

The training signals may comprise electromagnetic wave signals. For example, the training signals may comprise radio-frequency, RF, signals. RF signals may be electromagnetic signals including radio waves with frequencies of 300GHz and below. For example, a RF signal may include one or more electromagnetic waves in the frequency range from (approximately) 20kHz to 300GHz.

Alternatively/additionally, the training signals may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the training signals may comprise pressure wave signals, such as sound wave signals.

The data corresponding to the (first and second set of) training signals may comprise, for each training signal, the value of the training signal, information identifying the training tag from which the training signal was received, and information identifying the receiver at which the training signal was received.

The information identifying the training tag from which the training signal was received may comprise a unique identifier which enables the training tag to be identified from the other training tags. The information identifying the training tag may identify a zone in which in the training tag is located.

The data corresponding to the training signals may include a time stamp at which the training signal was received at the receiver and/or a time stamp at which the training signal was transmitted from the training tag.

The values of the training signals may be the strengths of, e.g., values of the power present in, the training signals.

The values of the training signals may be values of Received Signal Strength Indicator (RSSI values). RSSI may be understood as a measurement of the power present in a received (e.g., radio) signal.

Bluetooth Low Energy (BLE) technology may be used to determine RSSI, for example.

The first and/or second data collection periods may be predefined. They may be of the same or different durations.

The first data collection period may correspond to (e.g., be equivalent to) the second data collection period. In other words, the first set of training signals and the second set of training signals may be received at the receivers within the same data collection period, e.g., such that the training signals for both zones are collected together. In these examples, the training tags located in the first and second zones may transmit the training signals within the same predefined period.

Alternatively, the first and second data collection periods may be different, e.g., such that the training signals for the two zones are collected at different times/separately. In these examples, the training tags located in the first and second zones may transmit the signals at different times. In some examples, the training tags located in the first and second zones may transmit the training signals in sequence (e.g., such that the training signals for the first zone are collected first and then the training signals for the second zone are collected).

The first and second data collection periods may depend on a reporting interval of the receivers. For a reporting interval of e.g., 10 seconds, the first and second data collection periods may be predefined, as e.g., 5 minutes, for example. The first and/or second data collection period may be between 2 and 10 minutes, more preferably between 4 and 6 minutes, more preferably approximately 5 minutes, for example.

The training tags in each zone may be moved during the respective data collection period by an operator or a robot, for example. In particular, the plurality of training tags in the first zone may be moved from the first position to the second position in the first zone by one or more robots, and the plurality of training tags in the second zone may be moved from the first position to the second position in the second zone by one or more robots.

The training tags may be moved only once within a respective data collection period (e.g., between a first and second position in a respective zone), or may be moved a plurality of times within the respective data collection period (e.g., between a first, second, third, fourth...nth position in a respective zone).

The plurality of training tags in the first zone may be moved together from the first position to the second position. In other words, the plurality of training tags in the first zone may have the same/corresponding first and second positions in the first zone.

Similarly, the plurality of training tags in the second zone may be moved together from the first position to the second position. In other words, the plurality of training tags in the second zone may have the same/-corresponding first and second positions in the second zone.

In some examples, a robot or operator may move a container/box containing the training tags from the first position to the second position in the first/second zone.

The plurality of training tags in the first zone may be positioned spread across the first zone. The plurality of training tags in the second zone may be positioned spread across the second zone. The training tags may be spread across their respective zone to cover the zone as much as possible.

The receivers may be located in the environment. The receivers may be static (e.g., at fixed locations) during e.g., for the duration of, the first and second data collection periods.

The received data corresponding to the first set of training signals and the received data corresponding to the second set of training signals may each comprise a plurality of subsets of data corresponding to training signals, each subset comprising data corresponding to a plurality of training signals received from a respective training tag at a respective receiver.

In other words, a particular receiver may receive (or measure) a plurality of training signals from a same training tag during the respective data collection period. These training signals, and in particular the values (e.g., RSSI values) measured from the same training tag may be different over the data collection period. In some situations, this is a result of the training tags moving within the zone (e.g., between the first and second position). However, differences may also arise from multipath interference, e.g., diffraction, reflection or scattering resulting from objects (e.g., people) moving in the environment, errors introduced by transmission from multiple training tags at the same time, and/or errors introduced by the receiver antenna.

The method may comprise receiving data corresponding to a set of training signals received from the training tags located in each of the plurality of zones (e.g., as described above in relation to the first and second zones). Accordingly, the method may comprise receiving data corresponding to a set of training signals for each zone, wherein, for each zone, the set of training signals are received at the plurality of receivers, within a respective data collection period, from a plurality of training tags located in the respective zone of the plurality of zones. The training tags in each zone may be moved from a first position to a second position in the respective zone within the respective data collection period.

The method may comprise generating training data for each of the plurality of zones, in accordance with the methods described herein (e.g., as described above in relation to the first and second zones). Accordingly, the method may comprise generating training data for each zone of the plurality of zones, wherein the training data for each zone comprises values of the training signals received from training tags located in the respective zone within a respective predefined deviation window within the respective data collection period, each value associated with the receiver at which a respective training signal was received.

The method may then comprise training the machine learning model using the training data for each zone.

For completeness, as used herein the machine learning model may comprise one or more machine learning algorithms. The machine learning algorithm(s) may be configured to use or exploit data for classification and regression analysis.

The method may be computer-implemented. For example, the steps of the above-described method (e.g., receiving the data corresponding to the first and second sets of training signals, generating the training data for the first and second zones, and training the machine learning model) may be performed at one or more processors. The one or more processors may be located at a remote computing device or server (e.g., outside of the environment), such as the cloud, for example.

In some examples, the, or one or more (or all) of the processor(s) used to perform the steps of receiving the data corresponding to the first and second sets of training signals, generating training data for the zones, and training the machine learning model, may be located in the environment (e.g., in the warehouse, hospital or airport). They may be located in one or more of the receivers, for example. As such, the data corresponding to the first set of training signals may be received at the receivers, and the data corresponding to the second set of training signals may be received at the receivers, the training data for the first zone may be generated at one of the receivers, the training data for the second zone may be generated at one of the receivers, and the machine learning model may be trained at one of the receivers.

The method may further comprise the step of receiving, at the plurality of receivers, the first set of training signals from the plurality of training tags located in the first zone, and the second set of training signals from the plurality of training tags located in the second zone. As such, the method may comprise transmitting (from the plurality of receivers) to one or more processors, e.g., to a remote server, data corresponding to the first and second sets of training signals received at the plurality of receivers.

The training signals received at the receivers may be received by sampling continuous signals transmitted from the training tags. In these examples, each training tag may transmit a constant continuous signal (e.g., of a fixed value, frequency, amplitude, and/or having at least one (e.g., RF) characteristic that remains constant). In some examples, the continuous signals transmitted from the training tags may not be constant continuous signals (e.g., the value/amplitude/frequency of the signals may change over time).

In some examples, each training tag may be associated with a unique identifier (e.g., a value) such that it can be identified from other training tags. The training tags can then transmit their respective identifier to its (RF) front end in a loop, where it may be encoded and/or modulated before being transmitted on a given frequency. In these examples, a continuous signal may be considered a signal that maintains at least one (RF) characteristic constant (e.g., encoding, modulation, frequency etc.), and thus maintains a constant (radio) protocol, and that continually transmits the same value (e.g., its unique identifier) in a loop. In some examples, the (RF) protocol may vary the modulation or frequency over time.

In some examples, each training tag may not transmit a unique identifier, but may instead transmit a continuous tone (e.g., at a constant pitch), which does not carry information but that is transmitted with a predefined modulation (e.g., amplitude modulation) at a predefined frequency, such that the training tag can be identified.

In some examples, the training signals received from the training tags may comprise a plurality of discrete (e.g., non-continuous) signals transmitted from each training tag. In other words, the training tags may transmit discrete signals, rather than continuous signals. The training signals may be transmitted periodically or aperiodically from the training tag. The training tags may transmit discrete training signals of a constant value/amplitude. Alternatively, the training tags may transmit training signals of non-constant value/amplitude.

As mentioned above, the data corresponding to the first set of training signals, and the data corresponding to the second set of training signals, each comprises a plurality of subsets of data corresponding to training signals. Each subset comprises data corresponding to a plurality of training signals received from a respective training tag at a respective receiver.

Generating the training data for the first zone may comprise generating a plurality of first zone arrays of the values of the training signals received from the training tags located in the first zone. Each first zone array may include selected values of the training signals from a respective subset of the plurality of subsets (wherein each subset comprises data corresponding to training signals received from a respective tag at a respective receiver), wherein the selected values of training signals from each respective subset are selected from the training signals received within the first predefined deviation window, Wt, within the first data collection period.

Accordingly, each first zone array may correspond to a different receiver, and may include (RSSI) values of training signals received from a single respective receiver within the first predefined deviation window, Wt, in the first data collection period.

In this way, the first zone arrays, which each correspond to a different receiver, are constructed such that they include values of training signals from within a same predefined deviation window, Wt, within the first data collection period. Accordingly, the first zone arrays may be constructed by time-dependent leverage of the data, to account for the training tags being moved in the environment between the first and second position in the first zone, within the first data collection period. This time-dependent leverage also allows the training data to be constructed without requiring the receivers to be synchronized (e.g., without requiring the receivers to all receive/measure the values of the training signals from a respective training tag at the same time).

Similarly, generating the training data for the second zone may comprise generating a plurality of second zone arrays of the values of the training signals received from the training tags located in the second zone. Each second zone array may include selected values of the training signals from a respective subset of the plurality of subsets (wherein each subset comprises data corresponding to a plurality of training signals received from a respective tag at a respective receiver), wherein the selected values of training signals from each respective subset are selected from the training signals received within the second predefined deviation window, $W_t'$, within the second data collection period.

Accordingly, each second zone array may correspond to a different receiver and may include (RSSI) values of training signals received from a respective single receiver within the second predefined deviation window, Wt', in the second data collection period.

The first and second predefined deviation windows, Wt, Wt', (e.g., the deviation windows for the different zones) may be time periods of a predefined duration. The values of training signals for the first and second zone arrays may be selected from the training signals received within the first and second predefined deviation window, Wt, Wt', respectively.

The first and second predefined deviation windows, Wt, Wt', (e.g., the deviation windows for the different zones) may have the same duration.

The first predefined deviation window, Wt, may be centred about a predefined first primary timestamp, Tc, the first primary timestamp, Tc, being within the first data collection period. The first primary timestamp, Tc, may be selected at random from within the first data collection period.

The second predefined deviation window, Wt', may be centred about a predefined second primary timestamp, Tc', the second primary timestamp, Tc', being within the second data collection period. The second primary timestamp, Tc', may be selected at random from within the second data collection period.

The first and second primary timestamps, Tc, Tc', (e.g., the primary timestamps for the different zones) may be the same. Alternatively, they may be different.

Generating the plurality of first zone arrays may, for each first zone array, comprise:

selecting, for a respective subset of data corresponding to training signals, a first secondary timestamp, $T_{gn}$, within the first predefined deviation window, $W_t$,;
defining a first data window, $W_g$, around the first secondary timestamp, $T_{gn}$; and
selecting the values of the training signals received at the respective receiver within the first data window, $W_g$, as the values of the training signals in the first zone array.

The first secondary timestamp, $T_{gn}$, for each subset (e.g., for each receivers' data) may be different from one another. For example, the first secondary timestamp, $T_{gn}$, for each subset may be randomly selected from within the first predefined deviation window, $W_t$.

Generating the plurality of second zone arrays may, for each second zone array, comprise:

selecting, for a respective subset of data corresponding to training signals, a second secondary timestamp, $T_{gn}'$, within the second predefined deviation window, $W_t'$;
defining a second data window, $W_g'$, around the second secondary timestamp, $T_{gn}'$; and
selecting the values of the training signals received at the respective receiver within the second data window, $W_g'$, as the values of the training signals in the second zone array.

The second secondary timestamp, $T_{gn}'$, for each subset (e.g., for each receivers' data) may be different from one another. For example, the second secondary timestamp, $T_{gn}'$, for each subset may be randomly selected from within the second predefined deviation window, $W_t'$.

The first and/or second predefined deviation windows, Wt, Wt', may be predefined dependent on a reporting interval of the receivers. A reporting interval of the receivers may be the interval at which the receivers send data to a remote server, such as a cloud computing server. The first and second predefined deviation windows should be short enough to reduce the probability that the training tags have moved position within the first and second predefined deviation windows, but long enough to ensure training signals are received within the first and second predefined deviation windows. The predefined deviation windows may be constant across different zones,

The first and/or second predefined deviation windows, $W_t$, $W_t'$, may be between 15 and 45 seconds, more preferably between 20 and 40 seconds, more preferably between 25 and 35 seconds, more preferably approximately 30 seconds for example.

The first and/or second data windows, $W_g$, $W_g'$, may depend on a reporting interval of the receiver, and may be between 3 and 7 seconds, more preferably between 4 and 6 seconds, more preferably approximately 5 seconds.

Selecting the values of the training signals in the first/second zone arrays from within the first/second data windows, $W_g$, $W_g'$, rather than at the secondary timestamps, $T_{gn}$, $T_{gn}'$, increases the likelihood of selecting one or more received (RSSI) values of the training signals.

Generating each of the plurality of first zone arrays may comprise, if the respective receiver has not received any training signals from the respective training tag within the first data window, $W_g$, assigning a minimum observed value to the first zone array corresponding to that receiver.

Generating each of the plurality of second zone arrays may comprise, if the respective receiver has not received any training signals from the respective training tag within the second data window, $W_g'$, assigning a minimum observed value to the second zone array corresponding to that receiver.

The minimum observed value may be predefined. For example, for RSSI values, the minimum observed value may be -95, or -100. The minimum observed value may depend on the sensitivity of the receivers.

Generating the training data for the first zone may further comprise generating a plurality of Nx1 first zone arrays, N is the number of receivers, each of the Nx1 first zone arrays including values of training signals received from a single respective training tag, each value received at a different receiver, wherein each value in the respective Nx1 first zone array is selected from a first zone array corresponding to the respective training tag and respective receiver.

The values may be selected from the respective first zone array by taking an average (e.g., mean) of the values in the respective first zone array, or by selecting the maximum value in the first zone array. For RSSI values defined between -100 and 0, a maximum value may the value closest to 0.

Similarly, generating the training data for the second zone may further comprise generating a plurality of Nx1 second zone arrays, wherein N is the number of receivers, each of the Nx1 second zone arrays including values of training signals received from a single respective training tag, each value received at a different receiver, wherein each value in the respective Nx1 second zone array is selected from a second zone array corresponding to the respective training tag and respective receiver.

The values may be selected from the respective second zone array by taking an average (e.g., mean) of the values in the respective second zone array, or by selecting the maximum value in the second zone array. For RSSI values defined between -100 and 0, a maximum value may the value closest to 0.

Multiple Nx1 arrays may be generated for each training tag.

The machine learning model may then be trained using the plurality of Nx1 first zone arrays and the plurality of Nx1 second zone arrays.

The method may further comprise splitting the training data for the first and second zones into a training set and a testing set. The training set may comprise the majority of the training data. For example, the training set may comprise the training data for (approximately) 80% of the training tags in the first and second zones, and the testing set may comprise the training data for (approximately) 20% of the training tags in the first and second zones.

The machine learning model may then be trained using the training set. After the machine learning model is trained, the trained machine learning model may be tested using the testing set.

If, during the testing of the trained machine learning model, the trained machine learning model predicts the zone location of the training tags in the testing set to an accuracy of above a predefined threshold, the trained machine learning model may be validated for use (e.g., published for use).

If, during the testing of the trained machine learning model, the trained machine learning model predicts the zone location of the training tags in the test set to an accuracy below a predefined threshold accuracy, the trained machine learning model may be invalidated. The trained machine learning model may then be retrained using the methods taught herein using further training data, which may be from an additional data collection.

The trained machine learning model may be tested using the testing set by simulating real-time streaming of data based on the training set.

The machine learning model may comprise one or more support vector machine models (SVMs), also known as support vector networks. The SVM model(s) may be trained with a radial basis function (RBF) kernel. The SVM slack (C) may be tuned, e.g., by trial and error. The method may further comprise tracking the machine learning model, and determining hyperparameters, artifacts and performance of the machine learning model.

The method may further comprise a trained machine learning model validation step. This may comprise testing the trained machine learning model on a sample input including one or more signals received at one or more of the receivers from a sample tag; testing a previous machine learning model on the same sample input, and determining if a prediction accuracy of the trained machine learning model is higher than a prediction accuracy of the previous machine learning model. If the prediction accuracy of the trained machine learning model is higher than the prediction accuracy of the previous machine learning model, the previous machine learning model may be replaced by the trained machine learning model. The trained machine learning model may then be used for locating an asset in the environment. Accordingly, the method may further comprise deploying the trained machine learning model for use in locating an asset in the environment (e.g., on the Cloud).

If the prediction accuracy of the trained machine learning model is lower than the prediction accuracy of the previous machine learning model, the previous machine learning model is maintained (e.g., the previous machine learning model is the used for locating an asset in the environment, and the trained machine learning model may be discarded).

According to a second aspect, there is a provided a system configured to perform the method of the first aspect.

As such, there is provided a system for training a machine learning model for locating an asset in an environment, wherein the environment comprises a plurality of zones, the system comprising one or more processors, and memory storing thereon instructions that, as a result of being executed by the one or more processors, cause the system to:

receive data corresponding to a first set of training signals, wherein the first set of training signals are received at a plurality of receivers, within a first data collection period, from a plurality of training tags located in a first zone of the plurality of zones, and wherein the plurality of training tags are moved from a first position in the first zone to a second position in the first zone within the first data collection period;

receive data corresponding to a second set of training signals, wherein the second set of training signals are received at the plurality of receivers, within a second data collection period, from a plurality of training tags located in a second zone of the plurality of zones, and wherein the plurality of training tags are moved from a first position in the second zone to a second position in the second zone within the second data collection period;

generate training data for the first zone, wherein the training data for the first zone comprises values of the training signals received from training tags located in the first zone within a first predefined deviation window, Wt, within the first data collection period, each value associated with the receiver at which a respective training signal was received;

generate training data for the second zone, wherein the training data for the second zone comprises values of the training signals received from training tags located in the second zone within a second predefined deviation window, Wt', within the second data collection period, each value associated with the receiver at which a respective training signal was received; and

train, using the training data for the first zone and the training data for the second zone, a machine learning model to output a zone as a determined location of an asset in the environment based on an input including data corresponding to one or more signals received at one or more receivers from a tag associated with the asset.

The one or more processors and/or the memory may be located at a remote computing device or server (e.g., outside of the environment). The one or more processors and/or the memory may be located within the environment.

The system may further comprise the plurality of receivers configured to receive the first and second sets of training signals from the plurality of training tags in the first and second zones. The plurality of receivers may be located in the environment.

The one or more processors and/or memory may be located in one or more of the plurality of receivers, for example.

The system may further comprise the plurality of training tags located in first and second zones of the environment. The training tags may comprise active tags (e.g. the training tags may use a power source, e.g., a battery power source, to broadcast the training signals) and/or passive tags (e.g., the tags may not have their own power source but may transmit the training signals in response to receiving (e.g., radio frequency) energy from one or more of the receivers and/or from another transmitter.

According to a third aspect, there is provided a non-transitory computer-readable storage medium, storing thereon executable instructions that, as a result of being executed by one or more processors of a computer system, cause the computer system to perform the method of the first aspect.

According to a fourth aspect, there is provided a method for locating an asset in an environment, the method comprising:

training a machine learning model to locate an asset in the environment;

receiving data corresponding to one or more signals received at one or more receivers from a tag associated with the asset;

inputting the data corresponding to the one or more signals receiver from the tag into the trained machine learning model; and

determining, based on the output of the trained machine learning model, a zone in the environment as the determined location of the asset in the environment.

The step of training the machine learning model may be performed using the method of the first aspect.

Accordingly, there is provided a method for locating an asset in an environment, the method comprising:

training a machine learning model in accordance with the method of the first aspect;

receiving data corresponding to one or more signals received at one or more receivers from a tag associated with the asset;

inputting the data corresponding to the one or more signals received from the tag into the trained machine learning model; and

determining, based on the output of the trained machine learning model, a zone in the environment as the determined location of the asset in the environment.

The tag associated with the asset may be positioned on or adjacent to the asset. For example, if the environment is a warehouse, the tag may be positioned on a pallet containing the asset, or a shelf upon which the asset is positioned.

The one or more signals received from the tag associated with the asset may comprise electromagnetic wave signals. For example, the one or more signals may comprise radio-frequency, RF, signals.

Alternatively/additionally, the one or more signals may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the one or more signals may comprise pressure wave signals, such as sound wave signals.

The data corresponding to the one or more signals received from the tag may comprise, for each signal, the value of the signal, and information identifying the receiver at which the signal was received. The value of the signal may be RSSI values, for example. BLE technology may be used to determine RSSI, for example.

The method of the fourth aspect may comprise the step of receiving, at the one or more receivers, one or more signals from the tag associated with the asset.

The one or more signals received at the one or more receivers may be received by sampling continuous signals transmitted from the tag associated with the asset (similarly to as described above in relation to the training tags).

In some examples, the tag associated with the asset may be associated with a unique identifier (e.g., a value) such that it can be identified from other tags (which may be associated with other assets). The tags can then transmit their respective identifier to its (RF) front end in a loop, where it may be encoded and/or modulated before being transmitted on a given frequency. In these examples, a continuous signal may be considered a signal that maintains at least one (RF) characteristic constant (e.g., encoding, modulation, frequency etc.), and thus maintains a constant (radio) protocol, and that continually transmits the same value (e.g., its unique identifier) in a loop. In some examples, the (RF) protocol may vary the modulation or frequency over time.

In some examples, the tag may not transmit a unique identifier, but may instead transmit a continuous tone (e.g., at a constant pitch), which does not carry information but that is transmitted with a predefined modulation (e.g., amplitude modulation) at a predefined frequency.

In some examples, the one or more signals received from the tag associated with the asset may comprise a plurality of discrete (e.g., non-continuous) signals transmitted the tag (similarly to as described above in relation to the training tags).

A plurality of assets may be located in the environment, and the method of the fourth aspect may be for locating an asset from the plurality of assets in the environment. Each of the plurality of assets may be associated with a respective tag, wherein the respective tag may be positioned on or adjacent to its corresponding asset.

The same receivers may receive the training signals and the one or more signals from the tag associated with the asset.

According to a further aspect, there is provided a system configured to perform the method of the fourth aspect. As such, there is provided a system for locating an asset in an environment, the system comprising one or more processors, and memory storing thereon instructions that, as a result of being executed by the one or more processors, cause the system to perform the method of the fourth aspect.

According to a further aspect, there is provided a non-transitory computer-readable storage medium, storing thereon executable instructions that, as a result of being executed by one or more processors of a computer system, cause the computer system to perform the method of the fourth aspect.

The invention includes the combination of the aspects and preferred features described except where such a combination is clearly impermissible or expressly avoided.

***Summary of the Figures***

Embodiments and experiments illustrating the principles of the invention will now be discussed with reference to the accompanying figures in which:

   **Figure 1** is a schematic illustration of an example open environment in which the location of an asset is to be determined;

   **Figure 2** is a schematic illustration of an example indoor environment with a plurality of obstacles;

   **Figure 3** is a flow diagram of a localization framework for predicting the location of a required asset;

   **Figure 4** is a flow diagram of a method for training a machine learning model to predict the location of a required asset in the environment;

   **Figure 5** is a schematic illustration of the method of datapoint selection from collected raw data;

   **Figure 6** is a schematic illustration of a process for constructing data for real-time predictions and model evaluation; and

   **Figure 7** is a schematic illustration of a process for generating real-time predictions for model evaluation.

## Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

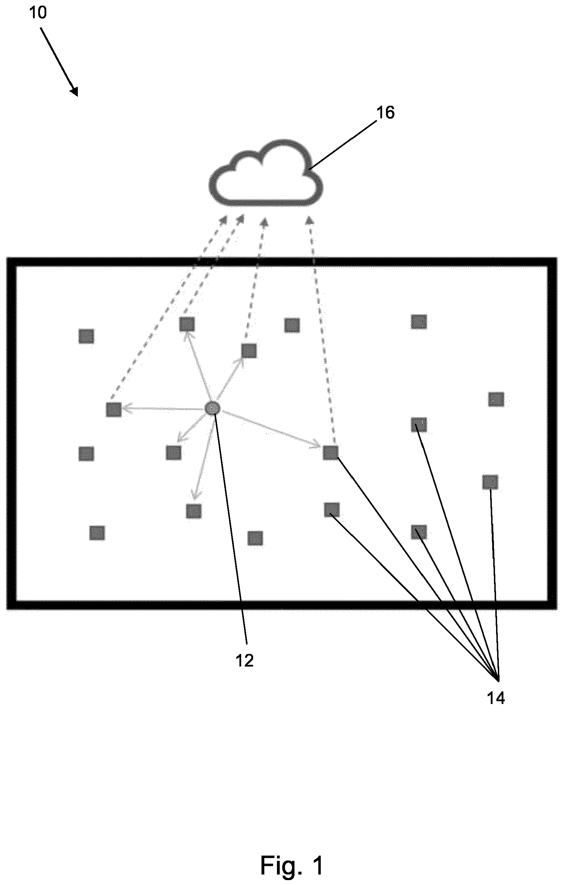

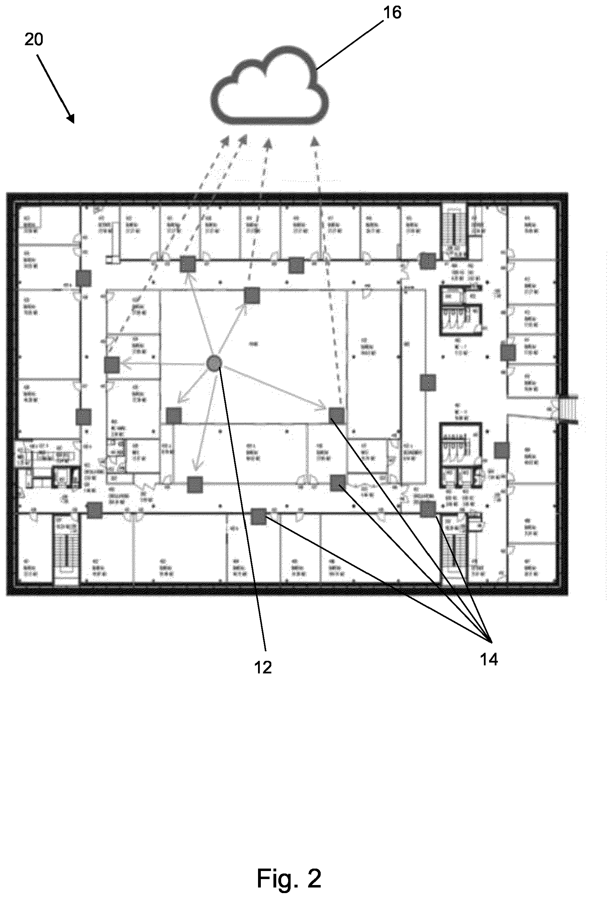

Radio frequency (RF) technology can be used to locate an asset from a plurality of assets in an environment 10, see e.g., Figure 1. The environment may be an inside or outside environment. It may be one or more rooms in a building (see e.g., the environment 20 in Figure 2). The environment may be a warehouse storing a plurality of assets, for example. It may be at least part of a hospital, an office building, an airport, a hangar, a factory, a manufacturing plant, a big-box store, a distribution warehouse, a fabrication plant, a campus (e.g., office school, university, etc.), a mall/shopping centre, a hotel, a server farm, a station, or a carpark for example

The environment comprises plurality of zones, which may be predefined as distinct areas within the environment. Each zone may include one or more rooms, for example.

A tag 12 can be assigned to each asset in the environment 10. Each tag 12 may be positioned on, adjacent to, or near its respective asset. As such, by determining a location of the tag, the location of the asset itself can be inferred by considering the location of the tag 12 to be equivalent to the location of the asset.

To determine the location of the asset in the environment, signals from the tags are received by a plurality of receivers 14, or gateways, positioned in the environment 10. The tags may be active tags having their own power source / battery to broadcast signals. The tags may be passive tags which do not have their own power source, but which transmit signals in response to receiving energy from one or more receivers/transmitters/transceivers.

The tags 12 may be radio frequency tags, e.g., Bluetooth Low Energy (BLE) tags. In these examples, the tag 12 may periodically transmit a same signal, or "packet", on three advertisement channels, in accordance with standard BLE protocol. The receivers may periodically receive the advertisement packets on at least one of the three advertisement channels.

A Received Signal Strength Indicator (RSSI) of each packet received from the tag 12 at a plurality of receivers 14 may be recorded. The RSSI is a measurement of the power present in a received radio signal, and is indicative of a distance between the tag 12 and the receiver 14 which received the signal from the tag 12.

The RSSI measurements may be sent to an external server 16, e.g., a cloud positioning server. An external server may be a server external to the environment. A positioning algorithm executing at the external server 16 may then use trilateration, triangulation or Time Difference of Arrival (TDOA) techniques to locate the tag 12. To have an accurate position estimation of the tag 12, these algorithms may assume that RF propagation is in free space without obstacles, such as in the open indoor environment 10 shown in Figure 1.

However, often there are obstacles such as walls, furniture and/or people who may be stationary or moving in the environment which impacts the RF propagation in the space. Figure 2 shows such an environment 20 including obstacles such as walls. These obstacles may impact the radio signal propagation due to diffraction, reflection and/or scattering, causing RF multipath interference/fading.

To reduce the effect of RF multipath interference, machine learning techniques can be used. Accordingly, the prediction of the location of a required asset 12 in a particular zone of the environment 10, 20 can be improved.

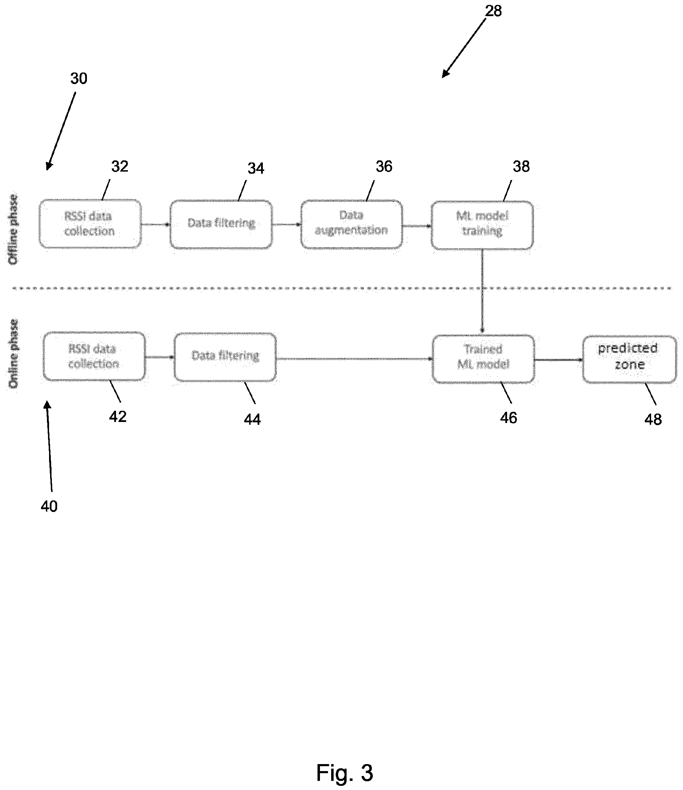

In particular, methods for locating a required asset in an environment may comprise two phases, as shown in localization framework 28 of Figure 3. Framework 28 includes an offline phase 30 and an online phase 40. The offline phase 30 may be performed in advance of the online phase 40.

In the offline phase 30, a fingerprint database containing an RSSI signature for each zone may be generated in a RSSI data collection step 32. The data in the fingerprint database collected at data collection step 32 may be filtered in a data filtering step 34, in order to reduce noise. The data may be augmented in a data augmentation step 36, in order to reduce the fingerprinting duration. Then, a machine learning model may be trained in a ML model training step 38, using the (filtered and augmented) data.

In the online phase 40, when a real-time stream of scanned RSSI values is received from each receiver 14 (e.g., at RSSI data collection step 42), the trained machine learning model may be used, with the real-time RSSI value stream, to predict a zone in the environment in which the required asset is located (see e.g., steps 46 and 48 of Figure 3). Prior to inputting the real-time stream of scanned RSSI values received at the RSSI data collection step 42, into the trained machine learning model at step 406, the online stage 40 may include a data filtering step 44, to reduce noise. This data filtering step 44 of the online phase 40 may include the same data processing performed during the offline phase 30, as described below.

The trained machine learning model may therefore generate a prediction of a most likely zone for the location of each tag that is advertising / broadcasting signals in the environment.

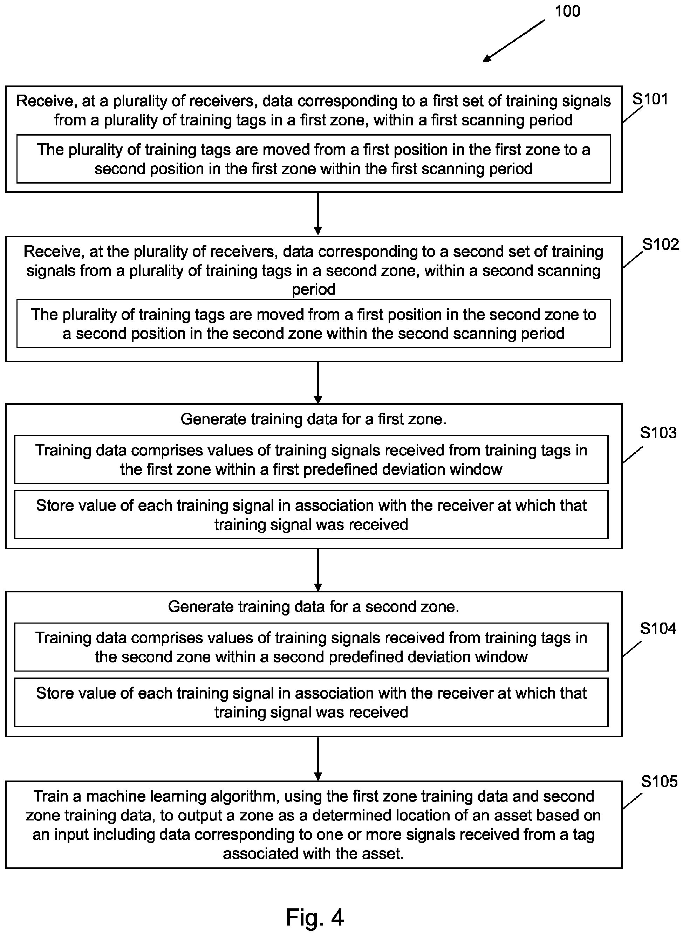

Example steps of offline phase 40 are set out in method 100 of Figure 4.

Prior to the data collection step 32, a new location may be created/defined as an environment. In particular, if a user would like to locate an asset in a warehouse, the warehouse may be defined as the environment. For example, a definition of the environment may include whether the environment is an indoor/outdoor environment, dimensions of the environment and/or shape of the environment. This information may be stored at a server, such as external server 16 shown in Figures 1 and 2.

A plurality of zones may be defined in the environment. These zones may have an equal area and/or shape for example. The plurality of zones may collectively cover the environment.

A plurality of receivers 14 may be deployed in the environment. Preferably, receivers may be positioned in all zones, and are evenly spaced over the zones. An identifier and location of each receiver 14 may be stored, e.g., by scanning a QR code on the receiver to obtain a unique identifier. As a result, a dedicated database for each new location may be stored, including information related to the location and identification of the receivers 14 in the location and the defined zones in the location.

As set out above in relation to Figure 3, the next step is a data collection step 32. To reduce the operational and time cost of data collection, the methods disclosed here simplify the data collection by dynamically changing the position of the tag inside the zone, and simulating the data to avoid the need to synchronize the receivers/gateways.

Data is collected for each zone in the environment. The receivers 14 may be switched to a data collection fast mode, for example. Data may be collected one zone at a time (e.g., sequentially). Alternatively, data may be collected in multiple zones simultaneously.

A plurality of training tags used for data collection may be positioned in the environment. The training tags may be BLE tags, for example. Information related to each training tag may be stored. This information may include a training tag identifier (e.g., a unique training tag serial number).

Instead of deploying multiple static tags in different positions in each zone, the tags can be moved from a first predefined location to another predefined location in the zone, during the data collection step 32. For example, for tags in a particular zone, an operator or a robot may move the tags from a first predefined position in the zone to a second predefined position in the same zone. The training tags may be moved only once within a respective data collection period of data collection or may be moved multiple times within the data collection period.

The plurality of training tags in a zone may be moved together from the first position to the second position. In other words, the plurality of training tags in the first zone may have the same/corresponding first and the same/corresponding second positions in the zone. In some examples, an operator or robot may move a container or box containing the training tags from the first position to the second position during the data collection step.

The duration of data collection may be predefined. The data collection duration may depend on a reporting interval of the receivers. In some examples, the predefined duration of data collection (e.g., the data collection period for each zone) may be approximately 5 minutes per zone. This may be sufficient for receiver reporting scanned training tags every 10 seconds (wherein the reporting interval of the receivers = scanning interval + a communication delay). For example, the scanning interval may be approximately 8 seconds, a communication delay may be approximately 2 seconds, and a training tag may advertise/broadcast every 3 seconds.

The data collection period for each zone may be the same, or have different durations.

Accordingly, during the data collection step 32 for a particular zone, a set of training signals is received at a plurality of receivers. The training signals are from a plurality of training tags positioned in the respective zone. The training tags are moved within the zone during the data collection step.

Each training signal may include information identifying a training tag from which the training signal was transmitted.

The raw datapoints for each zone may be stored, e.g., at a server external to the environment, for example. When a training signal is received from a training tag at a receiver, a receiver unique identifier may be stored in connection with a training tag unique identifier, a zone identifier, a time of receipt or timestamp, and/or identifier of location of the training tag. An indication of whether the zone is inside or outside may also be stored.

Data corresponding to the plurality of training signals may be received, from each zone, (see e.g., S101 and S102 of Figure 4) at one or more processors. The one or more processors may be located at one or more of the receivers. The one or more processors may be located internally to the environment and/or externally to the environment.

The one or more processors may determine an RSSI value of each training signal received.

The received data for each zone may comprise a plurality of subsets of data corresponding to training signals, each subset comprising data corresponding to a plurality of training signals received from a respective training tag at a respective receiver. Accordingly, each subset may include data received during the data collection period at a single receiver, from a single training tag.

In other words, a particular receiver may receive (or measure) a plurality of training signals from a same training tag during the respective data collection period. These training signals, and in particular the values (e.g., RSSI values) measured from the same training tag may be different over the data collection period. In some situations, this is a result of the training tags moving within the zone (e.g., between the first and second position). However, differences may also arise from multipath interference, e.g., diffraction, reflection or scattering resulting from objects (e.g., people) moving in the environment, errors introduced by transmission from multiple training tags at the same time, and/or errors introduced by the receiver antenna.

Training data may then be generated for each of the plurality of zones (see e.g., S103 and S104 of Figure 4). The training data may be generated at the one or more processors. For example, the training data for a first zone may be generated at a first one or more receiver, and the training data for a second zone may be generated at a second one or more receiver.

For example, for a first zone of the plurality of zones, training data may be generated which comprises RSSI values of training signals received from training tags located in the first zone (see e.g., S103 of Figure 4). It may be determined that the training tag is located in the first zone based on the information identifying the training tag from which the training signal was sent (e.g., a tag identifier), and stored information indicating a zone in which that training tag is located. The RSSI value may be stored in association with the receiver which received the training signal.

For a second zone of the plurality of zones, training data may be generated which comprises RSSI values of training signals received from training tags located in the second zone (see e.g., S104 of Figure 4). It may be determined that the training tag is located in the second zone based on the information identifying the training tag from which the training signal was sent (e.g., a tag identifier), and stored information indicating a zone in which that training tag is located. The RSSI value may be stored in association with the receiver which received the training signal.

The training data may be stored for each of the plurality of zones in the environment in a corresponding manner.

A list of sanity checks may then be executed, e.g., by the one or more processors, to validate the data quality, e.g., correctness and consistency of the data,

The step of generating training data involves the processing of the raw data from the data collection, to construct a suitable input for the machine learning model. This process is known as feature engineering. Since the receipt of the training signals at the receivers is not synchronized and the training tags are mechanically moving during the data collection step, there is a need to align in time the data coming from all receivers.

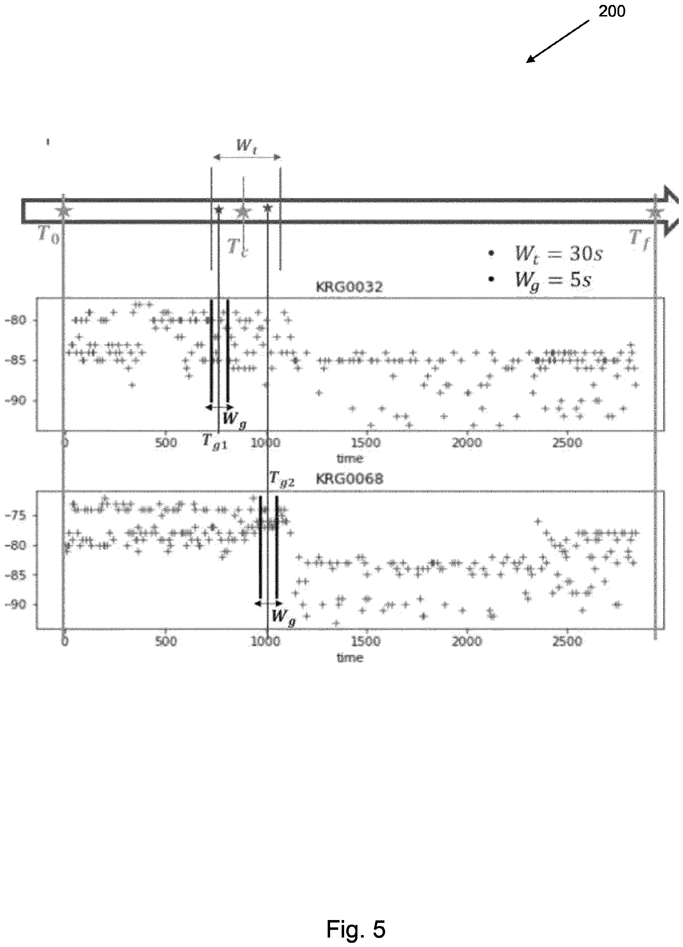

The feature engineering process for a zone is shown in schematic illustration 200 of Figure 5.

For each zone, a random training tag may be selected. From the raw data, the first time a training signal from that training tag is received, $T_o$, and a last time a training signal from that training tag is received, Tr, during the data collection period, may be determined across all receivers.

For each zone, a primary timestamp, $T_c$, may then be selected from within the range from $T_o$ to $T_f$ (e.g., $T_c \in [T_o, T_f]$), The primary timestamp for each zone may be randomly selected. They may be the same across all zones, or different.

Next, for each zone, a deviation window, Wt, may be defined around the random timestamp, $T_c$. The deviation windows, Wt, may be predefined, e.g., of a predefined duration/length. The deviation windows for each zone may have the same or different durations. The deviation window Wt for each zone may be between 15 and 45 seconds, more preferably between 20 and 40 seconds, more preferably between 25 and 35 seconds, more preferably approximately 30 seconds, for example.

For each receiver, from the data for each zone, a random secondary timestamp, $T_{gn}$, may be randomly selected from within the deviation window, $W_t$. In particular,

$$T_g \in \left| T_g - \frac{w_t}{2}, T_g + \frac{w_t}{2} \right|$$

. Figure 5 shows the randomly selected secondary timestamps, $T_{g1}$, $T_{g2}$, for subsets of data for two receivers (KRG0032 and KRG0068).

For each receiver, from the data for each zone, a data window $W_g$ may be defined about each secondary timestamp $T_{gn}$. The data window $W_g$ for each zone may be predefined, e.g., of a predefined duration. The data window for each zone may have the same or different durations. The data window $W_g$ for each zone may be between 3 and 7 seconds, more preferably between 4 and 6 seconds, more preferably approximately 5 seconds.

The values of training signals received at the respective receiver within the data window $W_g$ may then be selected to be values to be input in a zone array for that zone.

Accordingly, a plurality of zone arrays may then be generated for each zone. Each zone array may include the (e.g., RSSI) values of training signals received within the data window $W_g$ for a respective receiver. For the first zone, for example, the different first zone arrays may include data corresponding to training signals received from different receivers. In this way, the first zone arrays, which each correspond to a different receiver, are constructed such that they each include values of training signals from within a same predefined deviation window, Wt, within the first data collection period. However, each first zone array may include values of training signals from within different data windows $W_g$, but wherein the different data windows are all within the same deviation window, $W_t$.

Accordingly, the first zone arrays may be constructed by time-dependent leverage of the data, to account for the training tags being moved in the environment between the first and second position in the first zone, within the first data collection period. This time-dependent leverage also allows the training data to be constructed without requiring the receivers to be synchronized (e.g., without requiring the receivers to all receive/measure the values of the training signals from a respective training tag at the same time).

Whilst generating the plurality of zone arrays for each zone, if a respective receiver has not received any training signals from the respective training tag within the data window, $W_g$, a minimum observed value may be assigned to the first zone array corresponding to that receiver.

The minimum observed value may be predefined. For example, for RSSI values, the minimum observed value may be between -95, and -105dBm. The minimum observed value may depend on the sensitivity of the receivers.

A plurality of Nx1 arrays for each zone may then be generated, wherein N is the number of receivers. Each of the Nx1 arrays for each zone may include values of training signals received from a single respective training tag, each value received at a different receiver, wherein each value in the respective Nx1 zone array is selected from a zone array corresponding to the respective training tag and respective receiver. The values may be selected from the respective zone array by taking an average (e.g., mean) of the values in the respective zone array, or by selecting the maximum value in the zone array. For RSSI values defined between e.g., -100 and 0, a maximum value may the value closest to 0.

A machine learning model may then be trained using the Nx1 zone arrays for each of the plurality of zones (see e.g., S105 of Figure 4) to output a zone as a determined location of an asset based on an input including data corresponding to one or more signals received from a tag associated with the asset. A Support Vector Machine (SVM) with a radial basis function (RBF) may be trained using the Nx1 zone arrays. The SVM slack (C) may be tuned, e.g., by trial and error. The machine learning model may be tracked, and its hyperparameter, artifacts and performance logged/stored.

For this supervised machine learning, the features (e.g., the set of inputs that the model will rely on to distinguish between possible outputs) may be information about RSSI values received or scanned by the receivers, and the classes (e.g., the set of model outputs) may be the zones. In other words, the aim of the trained machine learning model is to be able to output a predicted zone as a location of the required tag, based on input information about RSSI values received from the required tag at identified receivers.

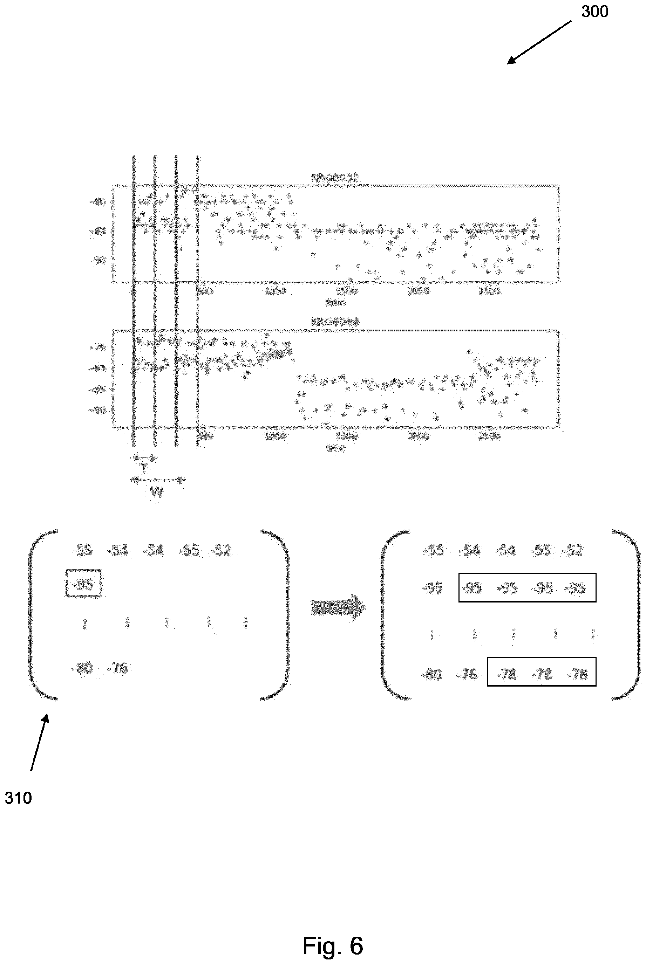

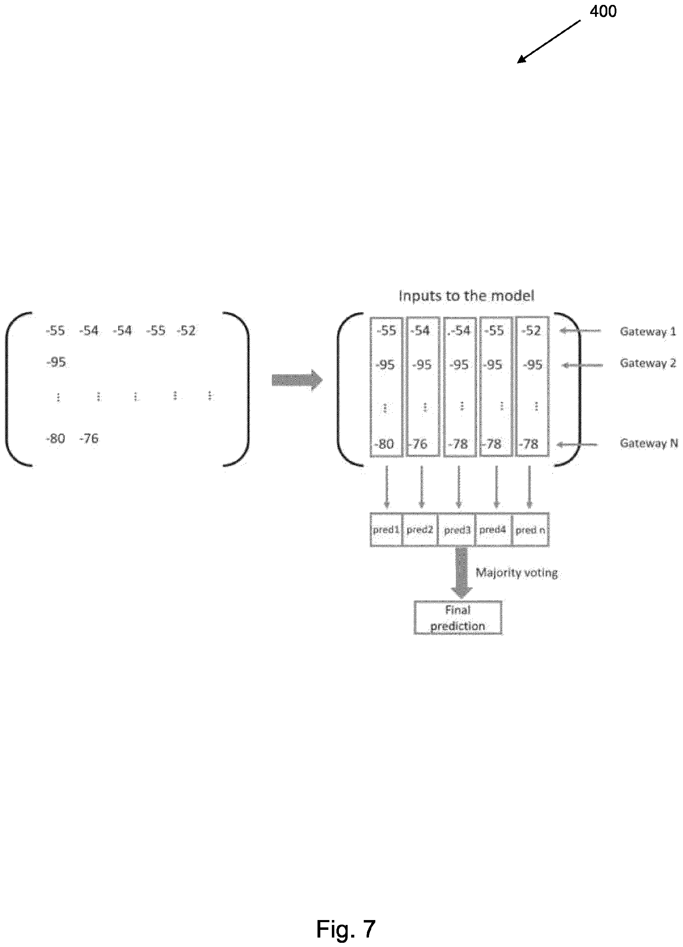

In order to have an accurate estimation of the trained machine learning model, the performance of the model may be pre-evaluated, by simulating the real-time streaming of the data. A schematic illustration 300 of the process for constructing data for real-time predictions and model evaluation is shown in Figure 6, and a schematic illustration 400 of the process for generating real-time predictions for model evaluation is shown in Figure 7.

To perform the trained machine learning model evaluation, the training data for each zone may be split into a training set and a testing set. The training set may comprise a majority of the training data. For example, the training set may comprise the training data for approximately 80% of the training tags, and the testing set may comprise the training data for the remaining approximately 20% of the training tags. The machine learning model may be trained (by the process as set out above), using the training set. The trained machine learning model may then be tested by simulating real-time streaming of data using the testing set.

In particular, from the testing set data (which may include data collected from across all zones), a timestamp of the first training signal from any of the training tags detected by one or more of the receivers may be determined. All the RSSI values for each training tag may be aligned according to the first RSSI value received. As shown in Figure 6, a predefined time-window, W, and a predefined time-step, T, may be fixed from the timestamp of the first detected training signal. The pre-defined time-step, T, may be smaller than the predefined time-window, W. The predefined time-window, W, may be approximately 1 minute, for example. The predefined time-step, T, may be approximately 50 seconds, for example.

For each time-window W, all the RSSI values for each receiver are collected in an evaluation array 310, where each row of the evaluation array 310 corresponds to a different receiver.

If no data is reported for a particular receiver from any training tag, a minimum observed value may be assigned to the evaluation array 310 corresponding to that receiver. In the example of Figure 6, a minimum observed value of -95 is assigned in the first column of the second row of the evaluation array 310 (indicated by the box).

The minimum observed value may be predefined. For example, for RSSI values, the minimum observed value may be between -95, and -105dBm. The minimum observed value may depend on the sensitivity of the receivers.

To ensure the evaluation array 310 has the correct input shape for the machine learning model, mean RSSI values of the recorded data may be input into the evaluation array 310. For example, if a particular receiver does not have sufficient data to fill each column of the evaluation array 310 for a particular receiver (e.g., row in the evaluation array 310), for example, if some receivers received less training signals than others, an average (e.g., mean) of the other RSSI values for that receiver may be appended. For example, in modified evaluation array 312 in Figure 6, a mean of -95 is appended for the receiver corresponding to the second row, and a mean of -78 is appended for the receiver corresponding to the fourth row (indicated by boxes).

Then, for each time-window, W, multiple predictions may be generated based on each evaluation array (which may be an NX1 array), e.g., using the sliding window method, with a final prediction generated using majority voting (see e.g., Figure 7). This process may then be used to evaluate the trained machine learning model.

After the machine learning model is trained, the trained machine learning model may be validated. In particular, the trained machine learning model may be validated if it is better than a previous machine learning model for the environment. If it is better, the previous machine learning model may be archived or discarded, and the trained machine learning model may be registered and deployed, e.g. on an external cloud server. If the trained machine learning model is not better, the previous machine learning model may be maintained for the environment. An error may be generated if the maximum performance between the trained machine learning model and the previous machine learning model fails to meet a predefined threshold (e.g., <80% accuracy).

The deployed trained machine learning model may then be used to predict the zone location of a required asset in the environment. Returning to Figure 2, a tag 12 associated with the required asset may transmit signals, which may be received at a plurality of receivers 14 in the environment. RSSI values of these signals may be determined from the signal. The RSSI values, as well as information identifying the receivers at which the signals were received may be transmitted to a processor, e.g., an external cloud server 16, where the trained machine learning model may be stored. The RSSI values and the corresponding receiver identifiers may be input into the trained machine learning model, which, when executed on the external cloud server 16, may output a predicted zone in the environment as the location of the required asset in the environment.

For completeness, although the above methods are described as using RSSI values, other signals and other values of the signals may be used to train the machine learning model, and to predict a location of a required asset using the trained machine learning model. For example, the one or more signals may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the one or more signals may comprise pressure wave signals, such as sound wave signals.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

**Claims**

1. A method for training a machine learning model for locating an asset in an environment when the machine learning model is executed on a computer system, wherein the environment comprises a plurality of zones, the method comprising:

   receiving data corresponding to a first set of training signals, wherein the first set of training signals are received at a plurality of receivers, within a first data collection period, from a plurality of training tags located in a first zone of the plurality of zones, and wherein the plurality of training tags are moved from a first position in the first zone to a second position in the first zone within the first data collection period;
   receiving data corresponding to a second set of training signals, wherein the second set of training signals are received at the plurality of receivers, within a second data collection period, from a plurality of training tags located in a second zone of the plurality of zones, and wherein the plurality of training tags are moved from a first position in the second zone to a second position in the second zone within the second data collection period;

generating training data for the first zone, wherein the training data for the first zone comprises values of the training signals received from training tags located in the first zone within a first predefined deviation window, Wt, within the first data collection period, each value associated with the receiver at which a respective training signal was received;

generating training data for the second zone, wherein the training data for the second zone comprises values of the training signals received from training tags located in the second zone within a second predefined deviation window, Wt', within the second data collection period, each value associated with the receiver at which a respective training signal was received; and

training, using the training data for the first zone and the training data for the second zone, a machine learning model to output a zone as a determined location of an asset in the environment based on an input including data corresponding to one or more signals received at one or more receivers from a tag associated with the asset.

2. The method of claim 1, wherein the values of the training signals are RSSI values.

3. The method of claim 1 or claim 2, wherein the plurality of training tags in the first zone are moved from the first position to the second position in the first zone by one or more robots, and the plurality of training tags in the second zone are moved from the first position to the second position in the second zone by one or more robots.

4. The method of any preceding claim, wherein:

the data corresponding to the first set of training signals is received at the receivers; the data corresponding to the second set of training signals is received at the receivers; the training data for the first zone is generated at one or more of the receivers; the training data for the second zone is generated at one or more of the receivers; and the machine learning model is trained at one or more of the receivers.

5. The method of any preceding claim, further comprising:

receiving, at the plurality of receivers, the first set of training signals from the plurality of training tags located in the first zone, and the second set of training signals from the plurality of training tags located in the second zone.

6. The method of any preceding claim, wherein the data corresponding to the first set of training signals comprises a plurality of subsets of data corresponding to training signals, and the data corresponding to the second set of training signals comprises a plurality of subsets of data corresponding to the training signals, each subset comprising data corresponding to a plurality of training signals received from a respective training tag at a respective receiver.

7. The method of claim 6, wherein:

generating the training data for the first zone comprises generating a plurality of first zone arrays of the values of the training signals received from the training tags located in the first zone, wherein each first zone array includes selected values of the training signals from a respective subset of the plurality of subsets, and wherein the selected values of the training signals from each respective subset are selected from the training signals received within the first predefined deviation window, Wt, within the first data collection period; and generating the training data for the second zone comprises generating a plurality of second zone arrays of the values of the training signals received from the training tags located in the second zone, wherein each second zone array includes selected values of the training signals from a respective subset of the plurality of subsets, and wherein the selected values of the training signals from each respective subset are selected from the training signals received within the second predefined deviation window, Wt', within the second data collection period.

8. The method of claim 7, wherein:

the first predefined deviation window, Wt, is centred about a predefined first primary timestamp, Tc, within the first data collection period, wherein the first primary timestamp, Tc, is randomly selected from within the first data collection period; and the second predefined deviation window, Wt', is centred about a predefined second primary timestamp, Tc', within the second data collection period, wherein the second primary timestamp, Tc', is randomly selected from within the second data collection period.

9. The method of claim 7 or claim 8, wherein:

generating the plurality of the first zone arrays comprises, for each first zone array:

selecting, for a respective subset of data corresponding to training signals, a first secondary timestamp, $T_{gn}$, within the first predefined deviation window, $W_t$;
defining a first data window, $W_g$, around the first secondary timestamp, $T_{gn}$; and
selecting the values of the training signals received at the respective receiver within the first data window, $W_g$, as the values of the training signals in the first zone array; and

generating the plurality of the second zone arrays comprises, for each second zone array:

selecting, for a respective subset of data corresponding to training signals, a second secondary timestamp, $T_{gn}'$, within the second predefined deviation window, $W_t'$;
defining a second data window, $W_g'$, around the second secondary timestamp, $T_{gn}'$; and
selecting the values of the training signals received at the respective receiver within the second data window, $W_g'$, as the values of the training signals in the second zone array.

10. The method of claim 9, wherein the first secondary timestamp $T_{gn}$, for each subset of data is different for data received from different receivers, and the second secondary timestamp, $T_{gn}'$ for each subset of data is different for data received from different receivers.

11. The method of claim 9 or claim 10, wherein:

generating each of the plurality of first zone arrays comprises, if the respective receiver has not received any training signals from the respective training tag within the first data window, $W_g$, assigning a minimum observed value to the first zone array corresponding to that receiver; and
generating each of the plurality of second zone arrays comprises, if the respective receiver has not received any training signals from the respective training tag within the second data window, $W_g'$, assigning a minimum observed value to the second zone array corresponding to that receiver.

12. The method of any of claims 7-11, wherein:

generating the training data for the first zone further comprises generating a plurality of Nx1 first zone arrays, wherein N is the number of receivers, each of the Nx1 first zone arrays including values of training signals received from a single respective training tag, each value received at a different receiver, wherein each value in the respective Nx1 first zone array is selected from a first zone array corresponding to a respective training tag and respective receiver;
generating the training data for the second zone further comprises generating a plurality of Nx1 second zone arrays, wherein N is the number of receivers, each of the Nx1 second zone arrays including values of training signals received from a single respective training tag, each value received at a different receiver, wherein each value in the respective Nx1 second zone array is selected from a second zone array corresponding to a respective training tag and respective receiver; and
the machine learning model is trained using the Nx1 first zone array and the Nx1 second zone array.

13. The method of any preceding claim, further comprising:

splitting the training data for the first and second zones into a training set and a testing set, wherein the training set comprises a majority of the training data for the first and second zones;
training the machine learning model using the training set; and
testing the trained machine learning model by simulating real-time streaming of data using the testing set.

14. A system for training a machine learning model for locating an asset in an environment, wherein the environment comprises a plurality of zones, the system comprising one or more processors, and memory storing thereon instructions that, as a result of being executed by the one or more processors, cause the system to perform the method of any of claims 1-13.

15. A method for locating an asset in an environment, the method comprising:

training a machine learning model according to the method of any of claims 1-13;
receiving data corresponding to one or more signals received at one or more receivers from a tag associated with the asset;
inputting the data corresponding to the one or more signals receiver from the tag into the

**EP 4 488 706 A1**

trained machine learning model; and
determining, based on the output of the trained
machine learning model, a zone in the environment as the determined location of the asset in
the environment.

Fig. 1

Fig. 2

28

30

32        34        36        38

Offline phase

| RSSI data collection | → | Data filtering | → | Data augmentation | → | ML model training |

Online phase

| RSSI data collection | → | Data filtering | ........ | Trained ML model | → | predicted zone |

42        44        46        48

40

Fig. 3

100

Receive, at a plurality of receivers, data corresponding to a first set of training signals from a plurality of training tags in a first zone, within a first scanning period — S101

The plurality of training tags are moved from a first position in the first zone to a second position in the first zone within the first scanning period

Receive, at the plurality of receivers, data corresponding to a second set of training signals from a plurality of training tags in a second zone, within a second scanning period — S102

The plurality of training tags are moved from a first position in the second zone to a second position in the second zone within the second scanning period

Generate training data for a first zone.

Training data comprises values of training signals received from training tags in the first zone within a first predefined deviation window

Store value of each training signal in association with the receiver at which that training signal was received

S103

Generate training data for a second zone.

Training data comprises values of training signals received from training tags in the second zone within a second predefined deviation window

Store value of each training signal in association with the receiver at which that training signal was received

S104

Train a machine learning algorithm, using the first zone training data and second zone training data, to output a zone as a determined location of an asset based on an input including data corresponding to one or more signals received from a tag associated with the asset.

S105

Fig. 4

Fig. 5

Fig. 6

400

Inputs to the model

$$\begin{pmatrix} -55 & -54 & -54 & -55 & -52 \\ -95 & & & & \\ & \vdots & \vdots & \vdots & \vdots & \vdots \\ -80 & -76 & & & \end{pmatrix}$$

| -55 | -54 | -54 | -55 | -52 | ← Gateway 1 |
| -95 | -95 | -95 | -95 | -95 | ← Gateway 2 |
| ⋮ | ⋮ | ⋮ | ⋮ | ⋮ | |
| -80 | -76 | -78 | -78 | -78 | ← Gateway N |

| pred1 | pred2 | pred3 | pred4 | pred n |

Majority voting

Final prediction

Fig. 7

| | Europäisches Patentamt European Patent Office Office européen des brevets | **EUROPEAN SEARCH REPORT** | Application Number EP 23 18 4247 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/129589 A1 (PARIKH NISHITH M [US] ET AL) 27 April 2023 (2023-04-27) * paragraph [0118] – paragraph [0162]; figures 1-7 * ----- | 1-15 | INV. G01S5/02 G06N20/00 ADD. G01S5/16 G01S5/18 |
| Y | WEN QUANGANG ET AL: "Indoor localization algorithm based on artificial neural network and radio-frequency identification reference tags", ADVANCES IN MECHANICAL ENGINEERING, vol. 10, no. 12, 1 December 2018 (2018-12-01), XP093105174, ISSN: 1687-8140, DOI: 10.1177/1687814018808682 Retrieved from the Internet: URL:http://journals.sagepub.com/doi/full-x ml/10.1177/1687814018808682> * pages 5-6; figure 1 * ----- | 1-15 | |
| A | WO 2023/281506 A2 (INTRAPOSITION LTD [IL]) 12 January 2023 (2023-01-12) * the whole document * ----- | 1-15 | TECHNICAL FIELDS SEARCHED (IPC) G01S G06N |
| A | US 2022/141619 A1 (PARIKH NISHITH M [US] ET AL) 5 May 2022 (2022-05-05) * the whole document * ----- | 1-15 | |

The present search report has been drawn up for all claims

| Place of search | Date of completion of the search | Examiner |
|---|---|---|
| Munich | 27 November 2023 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 4247

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2023

| Patent document cited in search report | Publication date | Patent family member(s) | Publication date |
|---|---|---|---|
| US 2023129589 A1 | 27-04-2023 | NONE | |
| WO 2023281506 A2 | 12-01-2023 | NONE | |
| US 2022141619 A1 | 05-05-2022 | NONE | |

EPO FORM P0459

For more details about this annex : see Official Journal of the European Patent Office, No. 12/82